# EUROPÄISCHE PATENTSCHRIFT

(11) **EP 0 972 892 B1**
(45) Veröffentlichungstag und Bekanntmachung des Hinweises auf die Patenterteilung: **09.08.2006**
(21) Anmeldenummer: 99106678.8
(22) Anmeldetag: 01.04.1999
(51) Int. Cl.: E04F 15/10, B29C 47/04, B29C 43/30, D06N 3/04, D06N 3/10, D06N 7/00, C08L 53/02

(54) **Elastomerer Fussbodenbelag und Verfahren zu seiner Herstellung**
Elastomeric floor covering and process for producing the same
Revêtement de sol à base d'élastomère et son procédé de fabrication

(30) Priorität: 14.07.1998 DE 19831509
(43) Veröffentlichungstag der Anmeldung: 19.01.2000
(73) Patentinhaber: Carl Freudenberg KG, 69469 Weinheim (DE)
(72) Erfinder: Graab, Gerhard, Dr., 68199 Mannheim (DE); Heckel, Klaus, Dr., 69517 Gorxheimertal (DE); Kühl, Hans-Michael, 69493 Hirschberg (DE)

(56) Entgegenhaltungen:
- EP-A- 0 046 526
- EP-A- 0 512 197
- WO-A-97/47802

## Beschreibung

### Technisches Gebiet

Die Erfindung befaßt sich mit einem elastomeren Fußbodenbelag. Insbesondere befaßt sie sich mit einem homogenen, richtungsfrei gemusterten Bodenbelag aus vernetzbarem, elastomerem Material. Ein Herstellungsverfahren wird ebenfalls angegeben.

### Stand der Technik

Aus EP-A1 0 512 197 ist ein gattungsgemäßer Fußbodenbelag bekannt, der eine völlige Freiheit von Lufteinschlüssen aufweist. Das Herstellungsverfahren ist dadurch charakterisiert, daß man über einen Schnecken-Kurzextruder mit sich anschließender Lochscheibe kontinuierlich aus zwei oder mehreren verschiedenfarbigen, vulkanisierbaren Elastomermaterialien 1 bis 2 mm kleine Formstücke durch Abschlagen der austretenden Stränge erzeugt.

Diese Formstücke werden durch den Spalt eines Zweiwalzenkalanders mit beheizbaren und kühlbaren, horizontal angeordneten Walzen unter einem konstanten Liniendruck geführt, wobei ein homogenes Band entsteht, welches zum fertigen Bodenbelag vulkanisiert wird. Um die Drucklinie im Walzenspalt möglichst schmal zu halten, wird ein sehr niedriges Durchmesser/Längen-Verhältnis von 1:3,5 bevorzugt.

Mit diesem Verfahren lassen sich Bodenbeläge mit einer Dicke um 2 mm nur in einer begrenzten Breite herstellen. Schon die in der Druckschrift genannte Breite von 1250 mm erfordert bei dem anzustrebenden Durchmesser/ Längen-Verhältnis des Kalanders von 1:3,5 einen Walzendurchmesser von 370 mm bei einer Länge von 1300 mm. Es hat sich gezeigt, daß sich solche schlanken Walzen bei der Herstellung einer 2 mm dicken Bahn um bis zu 1 mm und mehr in der Mitte ihres axialen Verlaufes voneinander wegbiegen. Dieser Effekt verstärkt sich mit zunehmender Walzenlänge bzw. Bahnenbreite bei gleichbleibendem Walzendurchmesser noch erheblich.

Die entstehende Bahn weist daher in ihrem entsprechenden, mittleren Flächenbereich eine Dicke von über 2,8 mm auf, und nur die kantennahen Bereiche besitzen die gewünschte Kalibrierdicke von 2 mm.

Eine Alternative zu dieser Linienpressung besteht darin, das Material flächig, zum Beispiel über eine Bandpresse, zu bearbeiten. EP-B1 0 046 526 beschreibt ein solches Verfahren, welches den Vorteil eines exakt gleichen Preßdruckes in allen Flächenbereichen und damit der Herstellbarkeit von Bahnen mit einheitlicher Dicke besitzt.

Hierbei wird eine Rohmaterialschicht aus aufgeschütteten thermoplastischen Teilchen fortlaufend bei 160°C bis 220°C flächig verdichtet und verschweißt und anschließend bei aufrechterhaltenem Druck abgekühlt und abgepreßt. Die Bahnenbreite ist hierbei lediglich von der Breite der Presse abhängig.

Versucht man diese - für thermoplastische Materialien beschriebene - Verfahrensweise auf vulkanisierbare, elastomere Werkstoffe für Bodenbeläge zu übertragen, ergeben sich Bahnen, deren Bruchdehnung nach DIN 53 504 Werte von lediglich 20 bis 30 % aufweisen. Solche geringen Dehnungen sind für Bodenbeläge jedoch unzureichend, da diese sehr oft auf unebenen Untergründen und anstoßend an Kantenbereiche verlegt werden müssen, wobei sie sich durch gewisse Dehnungseigenschaften den Unebenheiten und Paßungenauigkeiten zerstörungsfrei anpassen müssen.

Elastomeren Werkstoffen ist jedoch in jedem Fall der Vorzug zu geben, da sie im Gegensatz zu thermoplastischen Materialien auch über eine Beständigkeit gegen Zigarettenglut verfügen.

### Darstellung der Erfindung

Die Aufgabe der Erfindung ist es, einen homogenen, mehrfarbig richtungsfrei gemusterten Bodenbelag aus vernetzbarem, elastomerem Material anzugeben, welcher
- bei Breiten von über 1 m bis zu 2 m eine nur unwesentliche Dickenänderung (maximal 5 %) über seine gesamte Fläche aufweist,
- eine Dicke von 1,5 bis 3,5 mm besitzt,
- eine Mindestdehnung von 60% nach DIN 53 504 aufweist.

Die Erfindung hat ferner zur Aufgabe, ein kontinuierliches Herstellungsverfahren anzugeben, mittels dessen ein solcher Bodenbelag wirtschaftlich herstellbar ist.

Die Eigenschaft "homogen" ist für Bodenbeläge nach DIN 16 850 definiert: "Homogene Elastomer-Beläge, bestehend aus einer Schicht oder mehreren Schichten gleicher Zusammensetzung. Sie sind mehrfarbig durchgehend gemustert oder durchgehend einfarbig."

Die Lösung dieser Aufgabe umfaßt erfindungsgemäß einen homogenen, mehrfarbig richtungsfrei gemusterten Bodenbelag aus vernetzbarem, elastomerem Material mit den in der Aufgabenstellung geforderten Eigenschaften, welcher 3 bis 20 Gew.-%, bezogen auf sein Gesamtgewicht, eines Copolymers des Ethylens mit wenigstens einem Comonomeren enthält, welches der Gruppe der
- Vinylester gesättigter Carbonsäuren mit bis zu 4 C-Atomen in der Säuregruppe,
- ungesättigten Mono- oder Dicarbonsäuren,
- Ester ungesättigter Mono- oder Dicarbonsäuren mit bis zu 8 C-Atomen im Alkoholanteil
- α-Olefine mit 4 bis 10 C-Atomen
angehört.

Dabei muß der Ethylengehalt des Copolymers 40 bis 95 Gew%, der Comonomer-Gehalt 5 bis 60 Gew.-% betragen. Der Schmelzindex des Copolymers muß zwischen 0,1 und 50 liegen.

Als besonders vorteilhaft wurden Copolymeranteile von 3 bis 10 Gew.-% gefunden, weil dann die Verarbeitbarkeit der Mischung auf den Walzen aufgrund der geringen Klebrigkeit, im Vergleich mit solchen mit höheren Copolymeranteilen, günstiger ist. Außerdem werden die Eigenschaften des fertigen Bodenbelags nicht wesentlich beeinflußt; bei höheren Anteilen an Copolymeren als 10 Gew.-% kann zum Beispiel die Brandbeständigkeit verschlechtert werden.

Der Bodenbelag kann im wesentlichen in zwei Ausführungen vorliegen: Im einen Fall sind die ihn bildenden Granulat-Teilchen in sich einfarbig, im anderen Fall in sich farblich gemustert ausgebildet. Der optische Eindruck der Oberfläche ist bei der letztgenannten Variante etwas ruhiger, während die Alternative ein lebhafteres Oberflächenbild vermittelt.

### Ausführung der Erfindung

Die Herstellung des erfindungsgemäßen Bodenbelags erfolgt in an sich bekannter Weise dadurch, daß man zunächst aus unvulkanisiertem Elastomermaterial Granulat-Teilchen herstellt, welche voneinander verschiedene Farben aufweisen und welche auch in sich farblich inhomogen sein können. Hierzu werden entsprechende, verschiedenfarbige Gummimischungen unabhängig voneinander erzeugt, unter Verwendung von Extrudern in die Gestalt von Strängen überführt und anschließen in Korngrößen von bis zu 3,0 mm granuliert.

Sodann wird analog EP-B1 0 046 526 eine Aufschüttung von mindestens zwei verschiedenfarbigen Granulaten auf einem bandförmigen, horizontal bewegten Träger erzeugt. Solche Träger können aus Release-Papier, Stahlband oder Polytetrafluorethylenband bestehen und dürfen mit den Teilchen in jedem Fall keine Haftung bilden.

Die Verdichtung und die Vulkanisation erfolgen in einer der Breite des herzustellenden Bodenbelags entsprechenden Bandpresse bei 160 bis 180°C und unter einem Druck von 3 bis 30 N/mm². Anschließend wird die Rückseite der entstandenen Bahn im Interesse der Verbesserung der Verklebbarkeit geschliffen.

Erfindungswesentlich an diesem Verfahren ist, daß man den unvulkanisierten Gummimischungen vor ihrer Verarbeitung 3 bis 20 Gew.-%, bezogen auf das Gesamtgewicht der zu verarbeitenden Massen, eines Copolymers des Ethylens mit wenigstens einem Comonomeren zumischt.

Geeignete Comonomere sind
- Vinylester gesättigter Carbonsäuren mit bis zu 4 C-Atomen in der Säuregruppe,
- ungesättigte Mono- oder Dicarbonsäuren,
- Ester ungesättigter Mono- oder Dicarbonsäuren mit bis zu 8 C-Atomen im Alkoholanteil und
- α-Olefine mit 4 bis 10 C-Atomen.

Der Ethylengehalt des Copolymers beträgt 40 bis 95 Gew.-%, Rest: Comonomer, und der Schmelzindex des Copolymers muß zwischen 0,1 und 50 liegen.

Die Verwendung von 3 bis 10 Gew.-% Copolymeranteilen verringert die Klebrigkeit der Masse während der Verarbeitung und verbessert am fertigen Produkt die Brandbeständigkeit sowie auch dessen Rückstellvermögen nach mechanischer Belastung.

Für die Alternativen der Zusammensetzung des Bodenbelags aus in sich einfarbig oder in sich mehrfarbig strukturierten Granulat-Teilchen sind die entsprechenden Vorgehensweisen dem Fachmann geläufig. Die Herstellung mehrfarbiger Strukturen ist beispielsweise in EP-A1 0 512 197 beschrieben. Es muß bei der Strangpressung des zu Granulat-Teilchen zu zerkleinernden Materials lediglich darauf geachtet werden, daß die verschiedenfarbigen Streifen aus vulkanisierbarem Gummi keine farbliche Durchmischung erfahren.

Eine geeignete Vorrichtung hierzu ist beispielsweise ein herkömmlicher Schnecken-Kurzextruder, welcher bei 60 bis 100°C betrieben wird. In einer Ausführungsform passieren dabei die entstehenden Stränge eine Lochscheibe mit Bohrungen von 3 bis 5 mm Durchmesser; alle 1 bis 2 mm werden die austretenden Stränge abgeschlagen. Alternativ hierzu läßt man die plastifizierte Masse aus einer Schlitzdüse eines Schlauchspritzkopfes austreten und granuliert die abgekühlte Masse auf Schneidmühlen.

Die Menge des erfindungsgemäß im Bodenbelag vorhandenen bzw. vor der Bearbeitung der elastomeren Massen zugesetzten Copolymers ist in sinnvoller Weise nach unten auf 3 Gew.-% begrenzt, weil kleinere Anteile keinen wesentlichen Effekt auf die Dehnbarkeit mehr ausüben können. Nach oben beträgt diese Grenze 20 Gew.-%, da höhere Werte die Shore-Härte des elastomeren Werkstoffs zu sehr verändern würden; diese soll beim fertigen Bodenbelag möglichst gleich derjenigen der Ausgangsmischung sein.

Die folgenden Beispiele verdeutlichen mit vorteilhaften Ausführungsformen die Lösung der gestellten Aufgabe durch die Erfindung anhand vergleichbarer Meßergebnisse. Alle Beispiele gehen von Granulaten aus unvulkanisierten Elastomermaterial aus, welches sich folgendermaßen zusammensetzt:

| | |
|---|---|
| Styrol-Butadien-Kautschuk mit 23 Gew.% Styrolgehalt | 100 Teile |
| Styrol-Butadien-Copolymer mit 85 Gew.-% Styrolgehalt | 20 Teile |
| gefällter Kieselsäure | 40 Teile |
| Kaolin | 70 Teile |
| gefällter Kreide | 30 Teile |
| Cumaron-Inden-Harz | 15 Teile |
| Zinkoxid | 5 Teile |
| Stearinsäure | 1,5 Teile |
| Schwefelsäure | 2,5 Teile |
| Polyethylenglycol | 3 Teile |
| Cyclohexylbenzthiazylsulfenamid | 2,7 Teile |
| Tetramethylthiuramdisulfid | 0,5 Teile |
| Pigmente | nach Wahl |

Die Korngrößenverteilung der Granulate beträgt

| | |
|---|---|
| >2,5mm | 1% |
| > 2,0 mm | 33% |
| > 1,4 mm | 55 % |
| > 1,0 mm | 25 % |
| >0,71 mm | 6% |

Die Ausgangsmischung besitzt folgende Parameter:

**Tabelle 1**

| Ausgangsmischung | | | |
|---|---|---|---|
| als Walzenmischung | | als Streubelag | |
| Dehnung % | Shore-Härte | Dehnung % | Shore-Härte |
| 120 | 92 | 30 | 92 |

Tabelle 1 läßt erkennen, wie das oben charakterisierte Elastomer-Granulat nach der Verarbeitung gemäß dem Stand der Technik in einem Zweiwalzenkalander eine hervorragende Dehnung von 120% aufweist, während der gleiche, als Streubelag eine Bandpresse durchlaufende Werkstoff eine verlegungstechnisch unzureichende Dehnung von nur 30% besitzt.

Tabelle 2 gibt die Varianten der Verarbeitung der Ausgangsmischung über eine Bandpresse an. Hier wie in Tabelle 1 gelten die folgenden Parameter:

| | |
|---|---|
| Breite der Bandpresse: | 1500 mm |
| Breite des herzustellenden Bodenbelags: | 1300 mm |
| Preßdruck: | 30 N/mm² |
| Preßtemperatur. | 180°C |
| Vulkanisationszeit: | 4 min |

Wie aus Tabelle 2 deutlich wird, wurden der Mischung unterschiedliche Mengen eines Copolymers des Ethylen mit wenigstens einem Comonomeren zugefügt (1. Spalte). Die Comonomer-Gehalte sind in den nachfolgenden Spalten der Tabelle 2 diesen Copolymer-Mengen zugeordnet.

Es ergibt sich, daß - bei bezüglich der Ausgangsmischung nahezu unveränderten Shore-Härten - die erfindungsgemäß zusammengesetzten und zugegebenen Copolymere Mindestdehnungen von 60 % nach DIN 53 504 im Bodenbelag hervorrufen.

| Copolymer- Zusatz in kg | 18 % VA | | EVA 28 % VA | | 50 % VA | | EEA 18 % EA | | E-Octen 14 % Octen | |
|---|---|---|---|---|---|---|---|---|---|---|
| | Dehnung % | Shore-Härte | Dehnung % | Shore-Härte | Dehnung % | Shore-Härte | Dehnung % | Shore-Härte | Dehnung % | Shore-Härte |
| 10 | 35 | 93 | 40 | 92 | 60 | 91 | ---- | ---- | ---- | ---- |
| 15 | ---- | ---- | 40 | 92 | ---- | ---- | ---- | ---- | ---- | ---- |
| 20 | 55 | 92 | 70 | 91 | 160 | 89 | 45 | 92 | 40 | 92 |
| 30 | 70 | 91 | 90 | 90 | ---- | ---- | 60 | 91 | 60 | 90 |

### Tabelle 2

Bei der Verwendung von Copolymeren mit Vinylacetat als Comonomer gilt die Regel, daß niedrige Vinylacetat-Gehalte eine höhere Zugabemenge an Copolymer im Gemisch erfordern (über 20 kg, Tabelle 2). Diese erhöhten Zugabemengen führen jedoch nicht zu einer nennenswerten Verminderung der Shore-A-Härte des Produkts. Auch das Rückstellvermögen nach mechanischer Belastung wird hierbei nicht negativ beeinflußt.

Steigert man hingegen den Vinylacetat-Anteil im Copolymer auf beispielsweise 28 Gew.-%, wird die angestrebte Zugfestigkeit bereits bei 20 kg Copolymer-Zusatz erreicht, wie Tabelle 2 zeigt. Die Shore-A-Härte wird dabei nicht nachteilig abgesenkt.

Bei noch höheren Vinylacetat-Gehalten (50 Gew.-%) ist bereits bei geringen Zugabemengen an Copolymer (10 kg) eine deutliche Erweichung der Elastomermischung festzustellen.

Ähnlich verhalten sich Copolymere mit anderen Comonomeren; als Beispiel seien ein Ethylen-Ethylacrylat-Copolymer mit 18 Gew.-% Ethylacrylat-Gehalt sowie ein Ethylen-Octen-Copolymer mit 14 Gew.-% Octen-Gehalt genannt. Beide Copolymere sind im Handel erhältlich. Bei den vergleichsweise geringen Comonomer-Anteilen sind Zugaben an Copolymer über 20 kg notwendig, um die gewünschte Mindestdehnung zu erreichen. Die erzielten Shore-A-Härten liegen innerhalb, jedoch am Rande des noch tolerierbaren Bereichs.

## Patentansprüche

1. Homogener, mehrfarbig richtungsfrei gemusterter Bodenbelag aus vulkanisierbaren, elastomerem Material, mit einer Dicke von 1,5 bis 3,5 mm,
**dadurch gekennzeichnet, daß** der Bodenbelag bei Breiten von über 1 m bis zu 2 m in seiner Gesamtbreite keine Dickenänderung über + 5% aufweist, daß der Bodenbelag eine Mindestdehnung von 60% nach DIN 53 504 (Zugversuch) besitzt und daß er 3 bis 20 Gew.-%, bezogen auf sein Gesamtgewicht, eines Copolymers des Ethylens mit wenigstens einem Comonomer enthält, welches der Gruppe der
- Vinylester gesättigter Carbonsäuren mit bis zu 4 C-Atomen in der Säuregruppe oder
- ungesättigter Mono- oder Dicarbonsäuren oder
- Ester ungesättigten Mono- oder Dicarbonsäuren mit bis zu 8 C-Atomen im Alkoholanteil oder
- α-Olefine mit 4 bis 10 C-Atomen angehört,
wobei ferner der Ethylengehalt des Copolymers 40 bis 95 Gew.-%, der Comonomer-Gehalt 5 bis 60 Gew.-% beträgt und wobei der Schmelzindex des Copolymers zwischen 0,1 und 50 liegt.

2. Bodenbelag nach Anspruch 1, **dadurch gekennzeichnet, daß** er 3 bis 10 Gew.-% Copolymer enthält.

3. Bodenbelag nach Anspruch 1 oder 2, **dadurch gekennzeichnet, daß** die ihn bildenden Granulat-Teilchen in sich einfarbig sind.

4. Bodenbelag nach Anspruch 1 oder 2, **dadurch gekennzeichnet, daß** die ihn bildenden Granulat-Teilchen in sich farblich gemustert ausgebildet sind.

5. Verfahren zur Herstellung eines homogenen, mehrfarbig richtungsfrei gemusterten, 1,5 bis 3,5 mm dicken und 1 bis 2 m breiten Bodenbelags aus vulkanisierbarem, elastomerem Material, umfassend das Herstellen von Granulat-Teilchen, die in zumindest zwei voneinander verschiedenen Farben vorliegen, aus entsprechend verschiedenfarbigen, unabhängig voneinander erzeugten Gummimischungen, welche man unter Verwendung von Extrudern in die Gestalt von Strängen überführt und anschließend in Korngrößen von bis zu 3,0 mm granuliert;
umfassend ferner das anschließende Aufschütten der Granulat-Teilchen auf einen bandförmigen, horizontal bewegten Träger,
das Verdichten und Vulkanisieren in einer der Breite des herzustellenden Belages entsprechenden Bandpresse bei 160 bis 180°C und bei einem Druck von 3 bis 10 N/mm²,
das anschließende Schleifen der die Rückseite des Belags bildenden Fläche der entstandenen Bahn,
**dadurch gekennzeichnet, daß** man den unvulkanisierten Gummimischungen vor ihrer Verarbeitung 3 bis 20 Gew.-%, bezogen auf das Gesamtgewicht aller zu verarbeitenden Massen, eines Copolymers des Ethylens mit wenigstens einem Comonomer zumischt, welches der Gruppe der
- Vinylester gesättigter Carbonsäuren mit bis zu 4 C-Atomen in der Säuregruppe oder
- ungesättigten Mono- oder Dicarbonsäuren oder
- Ester ungesättigter Mono- oder Dicarbonsäuren mit bis zu 8 C-Atomen im Alkoholanteil oder
- α-Olefine mit 4 bis 10 C-Atomen angehört,
wobei ferner der Ethylengehalt des Copolymers 40 bis 95 Gew.-%, der Comonomer-Gehalt 5 bis 60 Gew.-% beträgt und wobei der Schmelzindex des Copolymers zwischen 0,1 und 50 liegt.

6. Verfahren nach Anspruch 5, **dadurch gekennzeichnet, daß** man einen Copolymeranteil von 3 bis 10 Gew.-% wählt.

7. Verfahren nach Anspruch 5 oder 6, **dadurch gekennzeichnet, daß** man in sich einfarbige Granulat-Teilchen erzeugt und verwendet.

8. Verfahren nach Anspruch 5 oder 6, **dadurch gekennzeichnet, daß** man in sich farblich gemusterte Granulat-Teilchen erzeugt und verwendet.

## Claims

1. Homogeneous floor covering having a multicolouredly directionless pattern, from vulcanizable elastomeric material and having a thickness of 1.5 to 3.5 mm, **characterized in that** the floor covering combines widths of above 1 m up to 2 m in its overall width with no thickness change above +5%, **in that** the floor covering possesses a minimum extension of 60% to DIN 53 504 (tensile test), and **in that** it contains 3 to 20% by weight, based on its overall weight, of a copolymer of ethylene with at least one comonomer belonging to the group of the
- vinyl esters of saturated carboxylic acids having up to 4 carbon atoms in the acid group or
- unsaturated mono- or dicarboxylic acids or
- esters of unsaturated mono- or dicarboxylic acids having up to 8 carbon atoms in the alcohol portion or
- α-olefins having 4 to 10 carbon atoms,
wherein furthermore the ethylene content of the copolymer is 40 to 95% by weight, the comonomer content is 5 to 60% by weight and wherein the melt index of the copolymer lies between 0.1 and 50.

2. Floor covering according to Claim 1, **characterized in that** it contains 3 to 10% by weight of copolymer.

3. Floor covering according to Claim 1 or 2,
**characterized in that** the granular particles forming it have a single colour in themselves.

4. Floor covering according to Claim 1 or 2,
**characterized in that** the granular particles forming it have a coloured pattern in themselves.

5. Process for producing a homogeneous floor covering having a multicolouredly directionless pattern, a thickness of 1.5 to 3.5 mm and a width of 1 to 2 m from vulcanizable elastomeric material, comprising the producing of granular particles existing in at least two colours which differ from each other, from correspondingly vari coloured rubber mixtures produced independently of each other, which are formed into strands using extruders and subsequently granulated in grain sizes of up to 3.0 mm;
comprising further the subsequent spreading of the granular particles on a band-shaped, horizontally moving carrier,
the compressing and vulcanizing in a band moulding press appropriate to the width of the floor covering to be produced, at 160 to 180°C and at a pressure of 3 to 10 N/mm²,
the subsequent polishing of the resulting web on the surface which forms the back side of the floor covering,
**characterized in that** the unvulcanized rubber mixtures are mixed prior to their processing with 3 to 20% by weight, based on the total weight of all masses to be processed, of a copolymer of ethylene with at least one comonomer belonging to the group of the
- vinyl esters of saturated carboxylic acids having up to 4 carbon atoms in the acid group or
- unsaturated mono- or dicarboxylic acids or
- esters of unsaturated mono- or dicarboxylic acids having up to 8 carbon atoms in the alcohol portion or
- α-olefins having 4 to 10 carbon atoms,
wherein furthermore the ethylene content of the copolymer is 40 to 95% by weight, the comonomer content is 5 to 60% by weight and wherein the melt index of the copolymer lies between 0.1 and 50.

6. Process according to Claim 5, **characterized in that** a copolymer fraction of 3 to 10% by weight is chosen.

7. Process according to Claim 5 or 6, **characterized in that** granular particles having a single colour in themselves are produced and used.

8. Process according to Claim 5 or 6, **characterized in that** granular particles having a coloured pattern in themselves are produced and used.

## Revendications

1. Revêtement de sol homogène à décor polychrome non directionnel, à base d'un matériau élastomère vulcanisable, d'une épaisseur de 1,5 à 3,5 mm,
**caractérisé en ce que** le revêtement de sol, pour des largeurs de plus de 1 m jusqu'à 2 m, ne présente, sur toute sa largeur, pas de variations d'épaisseur de plus de +5%, **en ce que** le revêtement de sol possède un allongement minimal de 60% selon la norme DIN 53 504 (essai de traction) et **en ce qu'**il contient de 3 à 20% en poids, par rapport à son poids total, d'un copolymère d'éthylène avec au moins un comonomère appartenant au groupe formé par
- des esters vinyliques d'acides carboxyliques saturés comportant jusqu'à 4 atomes de C dans le groupe acide ou
- des acides mono- ou dicarboxyliques insaturés ou
- des esters d'acides mono- ou dicarboxyliques insaturés comportant jusqu'à 8 atomes de C dans la partie alcool, ou
- des α-oléfines comportant de 4 à 10 atomes de C,
la teneur en éthylène du copolymère étant en outre de 40 à 95% en poids, la teneur en comonomère de 5 à 60% en poids, et l'indice de fusion du copolymère se situant entre 0,1 et 50.

2. Revêtement de sol suivant la revendication 1,
**caractérisé en ce qu'**il contient de 3 à 10% en poids de copolymère.

3. Revêtement de sol suivant la revendication 1 ou 2,
**caractérisé en ce que** les particules de granulat qui le forment sont en soi monochromes.

4. Revêtement de sol suivant la revendication 1 ou 2,
**caractérisé en ce que** les particules de granulat qui les forment sont en soi à motif coloré.

5. Procédé de préparation d'un revêtement de sol homogène à décor polychrome non directionnel, d'une épaisseur de 1,5 à 3,5 mm et d'une largeur de 1 à 2 m, à base d'un matériau élastomère vulcanisable, comprenant la préparation de particules de granulat, qui se présentent en au moins deux couleurs différentes l'une de l'autre, à base de mélanges de caoutchoucs de couleurs conformément différentes et produits indépendamment l'un de l'autre, que l'on façonne en boudins en utilisant des extrudeuses et que l'on granule ensuite en granulométries allant jusqu'à 3,0 mm,
comprenant en outre l'épandage subséquent des particules de granulat sur un support en forme de bande se déplaçant horizontalement,
le compactage et la vulcanisation dans une presse à bande correspondant à la largeur du revêtement à préparer, à une température de 160 à 180°C et sous une pression de 3 à 10 N/mm²,
le polissage subséquent de la surface formant l'envers du revêtement de la bande formée,
**caractérisé en ce que** l'on ajoute aux mélanges de caoutchoucs non vulcanisés, avant leur transformation, de 3 à 20% en poids, par rapport au poids total de toutes les masses à travailler, d'un copolymère d'éthylène avec au moins un comonomère, appartenant au groupe formé par
- des esters vinyliques d'acides carboxyliques saturés comportant jusqu'à 4 atomes de C dans le groupe acide ou
- des acides mono- ou dicarboxyliques insaturés ou
- des esters d'acides mono- ou dicarboxyliques insaturés comportant jusqu'à 8 atomes de C dans la partie alcool, ou
- des α-oléfines comportant de 4 à 10 atomes de C,
la teneur en éthylène du copolymère étant en outre de 40 à 95% en poids, la teneur en comonomère de 5 à 60% en poids, et l'indice de fusion du copolymère se situant entre 0,1 et 50.

6. Procédé suivant la revendication 5, **caractérisé en ce que** l'on choisit une fraction de copolymère de 3 à 10% en poids.

7. Procédé suivant la revendication 5 ou 6,
**caractérisé en ce que** l'on produit et utilise des particules de granulat en soi monochromes.

8. Procédé suivant la revendication 5 ou 6,
**caractérisé en ce que** l'on produit et utilise des particules de granulat à motif coloré.
